# EUROPÄISCHE PATENTSCHRIFT

(11) **EP 3 056 875 B1**
(45) Veröffentlichungstag und Bekanntmachung des Hinweises auf die Patenterteilung: **13.10.2021**
(21) Anmeldenummer: 16000099.8
(22) Anmeldetag: 16.01.2016
(51) Int. Cl.: G01F 1/66, G01F 1/684, G01F 15/00

(54) **DURCHFLUSSZÄHLER**
FLOW METER
DEBITMÈTRE

(30) Priorität: 03.02.2015 DE 102015001379
(43) Veröffentlichungstag der Anmeldung: 17.08.2016
(73) Patentinhaber: Diehl Metering GmbH, 91522 Ansbach (DE)
(72) Erfinder: Buckl, Roland, 91722 Arberg (DE); Meier, Marc-Andrè, 91567 Herrieden (DE); Müller, Johannes, 91720 Absberg (DE); Schuster, Reiner, 91598 Colmberg (DE); Vom Schloß, Edgar, 90574 Roßtal (DE); Stefke, Frank, 97258 Gollhofen (DE)
(74) Vertreter: Diehl Patentabteilung

(56) Entgegenhaltungen:
- EP-A1- 2 827 111
- WO-A1-03/087735
- DE-A1-102008 049 891
- DE-A1-102010 011 272
- DE-B3-102007 014 810
- US-A1- 2008 208 483
- None

## Beschreibung

### Durchflusszähler

Die vorliegende Erfindung betrifft einen Durchflusszähler zur Erfassung der Durchflussmenge und/oder der Wärmemenge eines strömenden Fluids zum Einbau in eine das Fluid beinhaltende Versorgungsleitung.

### Technologischer Hintergrund

Mittels Durchflusszähler ist es möglich, den Verbrauch eines Fluids, zum Beispiel von Wasser, zu erfassen. Ein Wärmezähler ermöglicht es, die über das Fluid als Transportmedium, beispielsweise Wasser oder ein fluides Gemisch auf Wasserbasis, gelieferte Energie in Form einer Kälte- oder Wärmemenge zu erfassen. Sowohl Durchflusszähler als auch Wärmezähler bzw. Kältezähler (im Folgenden beide als "Energiezähler" bezeichnet) unterliegen einer Eichpflicht. Um den Durchfluss bzw. die Wärmemenge bzw. die Kältemenge exakt erfassen zu können, ist es notwendig, dass der Durchflusszähler bzw. Energiezähler in die Versorgungsleitung korrekt eingebaut wird. Durchflusszähler sowie Energiezähler besitzen eine zumeist am Anschlussgehäuse des Durchflusszählers angebrachte Markierung der Zählerdurchflussrichtung, sodass der Monteur den Durchflusszähler in Übereinstimmung mit der Zählerdurchflussrichtung installieren kann. Energiezähler werden üblicherweise im sogenannten Rücklauf installiert, da sie dort einer geringeren Temperatur als im Vorlauf ausgesetzt sind. Es gibt allerdings auch Einbausituationen, bei denen ein Energiezähler im Vorlauf installiert wird. Daraus resultiert, dass es üblicherweise spezielle Energiezähler für den Rücklauf sowie spezielle Energiezähler für den Vorlauf gibt. Ein etwaiger Fehleinbau eines Durchflusszählers bzw. Energiezählers, sei es hinsichtlich der Durchflussrichtung oder hinsichtlich des Einbaus im Vor- oder Rücklauf, ist für Monteure häufig jedoch nicht sofort erkennbar, sondern stellt sich erst dann heraus, wenn erstmals Daten ausgelesen werden. Eine etwaige Demontage bzw. Behebung des Fehlers ist aufwendig und kostenintensiv. Des Weiteren müssen Energiezähler für den Vorlauf sowie den Rücklauf bei Installateuren, Energieversorgungsunternehmen, Vertriebspartnern und Kommunen vorrätig gehalten werden. Auch kommt es häufig zu Falschbestellungen bzw. zu notwendigen Zähleraustauschmaßnahmen.

### Nächstliegender Stand der Technik

Ein Durchflusszähler gemäß dem Oberbegriff des Anspruchs 1 ist aus der DE 10 2010 011 272 A1 bekannt. Diesem bekannten Durchflusszähler liegt die Idee zugrunde, die Durchflussrichtung anhand eines positiven bzw. negativen Durchflusses sowie die positive oder negative Temperaturdifferenz zwischen Vorlauf- und Rücklauftemperatur festzustellen und dies an einer am Energiezähler angeordneten Anzeigeeinheit in Form von Pfeilen anzuzeigen. Der Monteur erkennt hieraus eine falsche Installation des Energiezählers in Bezug auf die Durchflussrichtung sowie eine falsche Installation des Energiezählers im Vorlauf bzw. Rücklauf. In Anbetracht dessen kann der Monteur den Energiezähler demontieren und am korrekten Einbauort und/oder der korrekten Lage wieder installieren. Sofern eine fehlerhafte Installation stattgefunden hat und diese unbemerkt geblieben ist, werden aufgrund einer eigenständigen Erfassung fehlerhafte Temperaturdaten, insbesondere in Form von negativen Temperaturdifferenzen, in einem Speicher abgelegt. Dies ermöglicht es im Nachhinein, fehlerhafte Daten zu erfassen und das Messergebnis diesbezüglich zu bereinigen.

Aus der DE 10 2007 014 810 B3 ist ein Energiezähler bekannt, bei dem in einem Datennebenspeicher während des Abrechnungszeitraums nicht ordnungsgemäß erfasste Wärme- oder Kältemengen hinterlegt werden und für eine genauere Abschätzung des tatsächlichen Energieverbrauchs verwendet werden.

In der EP 2 827 111 A1 ist ein Ultraschallzähler zur Erfassung der Durchflussmenge eines Fluids beschrieben, bei dem die Ultraschall-Messstrecke in dem Messrohrgehäuse als Bypasskanal ausgebildet und zusätzlich im Bereich des Bypasskanals eine ringabschnittförmige Durchflussblende zur Erzeugung eines Druckabfalls vorgesehen ist.

### Aufgabe der vorliegenden Erfindung

Die Aufgabe der vorliegenden Erfindung besteht darin, einen gattungsgemäßen Durchflusszähler zur Verfügung zu stellen, welcher Fehlinstallationen in Bezug auf die Einbaurichtung und/oder den Einbauort bezüglich Vor- und Rücklauf ausschließt.

### Lösung der Aufgabe

Die vorstehende Aufgabe wird durch einen Durchflusszähler mit den Merkmalen der Ansprüche 1 und 2 gelöst. Zweckmäßige Ausgestaltungen der Erfindung sind in den abhängigen Ansprüchen beansprucht.

Bei dem erfindungsgemäßen Durchflusszähler gemäß Anspruch 1 ist vorgesehen, dass sich die Steuer- und Auswerteeinheit bei einer Erst- oder Wiederinstallation des Durchflusszählers selbsttätig konfiguriert, d.h. programmiert, derart, dass in dem der Erstinstallation oder Wiederinstallation nachfolgenden Dauerbetrieb die Zählerdurchflussrichtung an die Einbaudurchflussrichtung angepasst ist, so dass die Zählerdurchflussrichtung und die Einbaudurchflussrichtung übereinstimmen.

Bei dem erfindungsgemäßen Durchflusszähler gemäß Anspruch 2 ist vorgesehen, dass sich die Steuer- und Auswerteeinheit bei einer Erst- oder Wiederinstallation des Durchflusszählers selbsttätig konfiguriert, d.h. programmiert, derart, dass in dem der Erstinstallation bzw. Wiederinstallation nachfolgenden Dauerbetrieb in Abhängigkeit der gemessenen Temperaturdifferenz der erste Temperatursensor sowie der zweite Temperatursensor dem Vorlauf bzw. dem Rücklauf zugeordnet wird.

Die vorliegende Erfindung beruht auf dem Gedanken, die Einbausituation des Durchflusszählers bezüglich der Durchflussrichtung oder des Installationsortes (im Vorlauf oder im Rücklauf) nicht geräteseitig definiert vorzugeben, sondern die tatsächliche, durch den Monteur geschaffene Einbausituation durch den Durchflusszähler selbst auf der Grundlage der dem Durchflusszähler zur Verfügung stehenden Messdaten festzulegen. Eine nachträgliche Demontage/Montage fällt ersatzlos weg. Unterschiedliche Geräte müssen nicht vorgehalten werden. Drehbare oder abnehmbare Displays sind nicht mehr notwendig. Eine eigenständige datentechnische Erfassung sowie Auswertung von aufgrund einer Falschinstallation inkorrekter Datenmengen während des Abrechnungszeitraums ist nicht notwendig. Diese Betriebsfestlegung kann mit einem Eichsiegel gesichert werden.

Zweckmäßigerweise ist der Durchflusszähler strömungstechnisch symmetrisch aufgebaut. Der Messkanal des Durchflusszählers unterliegt somit in und gegen die Strömungsrichtung den gleichen Strömungsverhältnissen. Dadurch kann der Durchflusszähler auch um 180° gedreht in eine Versorgungsleitung eingebaut werden, ohne dass sich die Strömungsverhältnisse und damit die Messung ändert.

Insbesondere sind Strömungsleitelemente und/oder Strömungssiebe und/oder Reflektoren und/oder Halterungen und/oder der Einlauf-/Auslaufbereich und/oder die mit der Strömung in Kontakt stehende Innenwandung in symmetrischer Anordnung und/oder Ausbildung und/oder Orientierung in einem Gehäuse des Durchflusszählers vorgesehen, vorzugsweise in dem sog. Anschlussgehäuse, welches in die Versorgungsleitung eingesetzt ist. Insofern können hierdurch strömungstechnisch symmetrische Verhältnisse in dem Messkanal des Durchflusszählers geschaffen werden.

Dadurch, dass die Steuer- und Auswerteeinheit eine Plausibilitätsroutine umfasst, kann ein unklarer Status (Luft in der Leitung, Rückflüsse in der Leitung, undefinierte Verhältnisse bei Spülung der Leitung usw.) des Durchflusszählers zu Beginn der Konfiguration sicher ausgeschlossen werden.

Vorzugsweise kann im Zuge der Plausibilitätsroutine eine Erfassung des Durchflusses über eine vorgegebene Zeit tx erfolgen und hierbei festgestellt werden, ob der gemessene Durchfluss während dieser Zeitspanne innerhalb oder außerhalb vorgegebener Grenzwerte der Durchflussmenge liegt.

Weist der Durchflusszähler eine Temperaturmesseinrichtung auf, kann im Zuge der Plausibilitätsroutine eine Erfassung der Temperaturdifferenz der Temperatursensoren erfolgen. Vorzugsweise kann hierzu eine vorgegebene Temperaturdifferenz als Vergleichswert ΔT vorgesehen sein.

Sofern die Steuer- und Auswerteeinheit eine Alarmroutine umfasst, die von der Steuerung aktivierbar ist, und falls die Plausibilitätsroutine negativ ist, erhält der Monteur einen Alarm am Gerät, dass die Eigenkonfiguration noch nicht korrekt verlaufen ist. In diesem Fall ist es zweckmäßig, gegebenenfalls z.B. die Rohrleitung nochmals zu spülen, bis ein erneuter Versuch einer Eigenkonfiguration gestartet wird.

Sobald die Eigenkonfiguration erfolgreich durchgeführt wurde, wird die Anpassung der Zählerdurchflussrichtung an die Einbaudurchflussrichtung und/oder die Zuordnung von erstem Temperatursensor sowie zweitem Temperatursensor zum Vorlauf bzw. Rücklauf von der Steuer- und Auswerteeinheit unveränderbar festgelegt. Diese Autoinstallation ist danach nicht mehr wiederholbar, um Manipulationen zu verhindern. Der Durchflusszähler ist dann in den geeichten und unabänderlichen Betrieb übergeführt.

Zweckmäßigerweise handelt es sich um einen softwaregesteuerten Prozess, bei dem die Durchflussmengendaten und/oder die Temperaturdifferenzdaten, die ohnehin zur Verfügung stehen, ausgewertet und Informationen zur Durchflussrichtung und/oder dem Einbauort generiert werden.

Ferner kann ein dritter Temperatursensor vorgesehen sein, der sich am oder im Gehäuse des Durchflusszählers befindet, wobei im Rahmen der Erst- oder Wiederinstallation die Temperaturdifferenz durch Messung der Temperaturdifferenz zwischen dem dritten Temperatursensor und dem ersten Temperatursensor sowie die Temperaturdifferenz durch Messung der Temperaturdifferenz zwischen dem dritten Temperatursensor und dem zweiten Temperatursensor ermittelt wird, und in Abhängigkeit davon der Einbauort des Durchflusszählers in Vor- oder Rücklauf festgestellt werden kann.

Vorteilhafterweise kann auch einer der drei Temperatursensoren zur Korrektur der ermittelten Durchflussmenge (temperaturbedingte Volumenkorrektur) herangezogen werden.

Hierbei kann vorgesehen sein, dass der Temperatursensor aus dem Paar bestehend aus erstem Temperatursensor oder zweitem Temperatursensor für die Volumenkorrektur ausgewählt wird, der zum dritten Temperatursensor die geringe-re Temperaturdifferenz aufweist. Diese Erkennung kann an einer Anzeigeeinheit, zum Beispiel einem LCD-Bildschirm, angezeigt werden.

Dadurch, dass die selbsttätige Ermittlung der Durchflussdaten und/oder der Temperaturdifferenz nach erfolgter Anpassung der Durchflussrichtung und/oder Zuordnung der Temperatursensoren deaktiviert wird, ist der Vorgang lediglich auf die Erstinstallation oder Wiederinstallation limitiert und eine Manipulation daher nicht möglich. Eine erneute Erkennungsroutine oder -methode ist somit nur durch eine Prüfstelle unter Zerstörung bzw. Brechen des Eichsiegels möglich.

Im Rahmen der Selbstkonfiguration kann es erforderlich sein, dass die Messdaten des Durchflusses zur Anpassung der Zählerdurchflussrichtung an die Einbaudurchflussrichtung untereinander vertauscht werden und/oder die Messdaten der Temperatursensoren zur Zuordnung des ersten Temperatursensors sowie des zweiten Temperatursensors zum Vorlauf bzw. Rücklauf untereinander vertauscht werden. Nach der Vertauschung werden die dann im Dauerbetrieb ermittelten Messdaten korrekt der jeweiligen tatsächlichen Durchflussrichtung sowie den jeweiligen Temperatursensoren zugeordnet. Sofern die Einbausituation von vorneherein korrekt ist, "bestätigt" das System diesen Zustand.

### Beschreibung der Erfindung anhand von Ausführunqsbeispielen

Die Erfindung ist anhand von vorteilhaften Ausführungsbeispielen gemäß den Zeichnungsfiguren näher erläutert. Diese zeigen:
- Fig. 1: eine stark vereinfachte Prinzipdarstellung eines in einer Versorgungsleitung eingebauten Durchflusszählers;
- Fig. 2: eine stark vereinfachte Prinzipdarstellung eines in einem Rücklauf eingebauten Durchflusszählers;

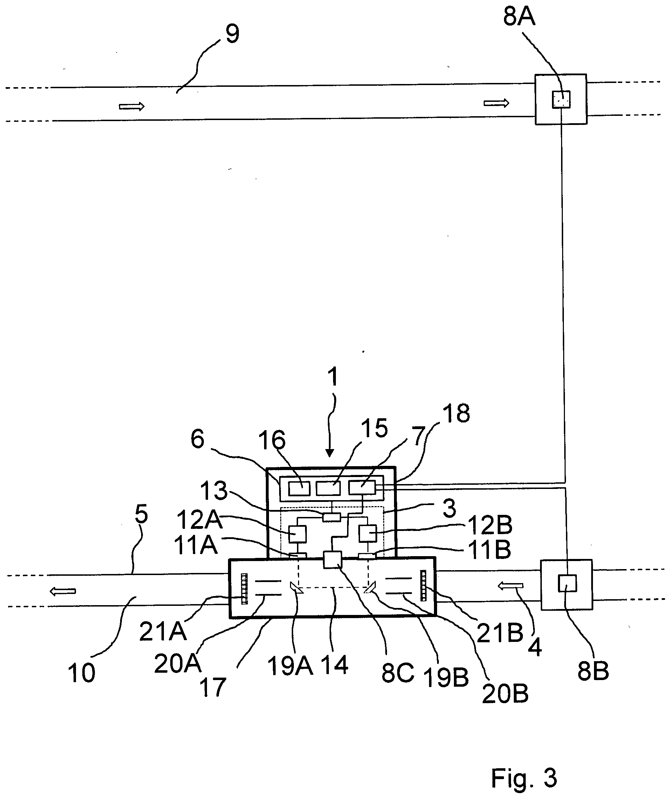

- Fig. 3: eine stark vereinfachte Prinzipdarstellung eines in einem Rücklauf eingebauten Durchflusszählers mit einem dritten Temperatursensor;
- Fig. 4: ein Flussdiagramm zur automatischen Ermittlung der Durchflussrichtung eines Durchflusszählers;
- Fig. 5: ein Flussdiagramm zur Zuordnung der Temperatursensoren und/oder der Durchflussrichtung sowie zur Ermittlung des Einbauortes eines Durchflusszählers; sowie
- Fig. 6: eine stark vereinfachte Darstellung zur Erläuterung der möglichen automatischen Vertauschung von Messdaten.

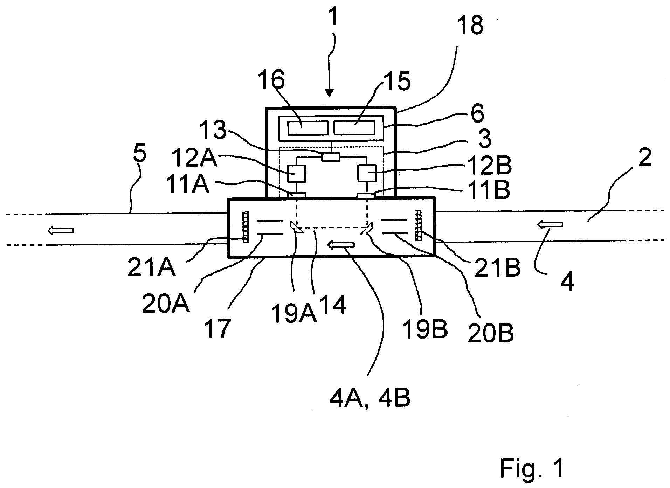

Fig. 1 zeigt einen erfindungsgemäßen Durchflusszähler 1, der zur Erfassung der Durchflussmenge eines strömenden Fluids 2 in eine das Fluid 2 beinhaltende Versorgungsleitung 5 eingebaut ist.

Der gezeigte Durchflusszähler 1 umfasst ein Gehäuse 17, insbesondere ein sogenanntes Messrohrgehäuse, das von dem Fluid 2 mit einer in der Versorgungsleitung 5 vorherrschenden Durchflussrichtung 4 durchströmt wird. An der Oberseite des Gehäuses 17 befinden sich ein erster sowie zweiter Ultraschallwandler 11A sowie 11B, die zusammen mit einem ersten Reflektor 19A sowie einem zweiten Reflektor 19B eine U-förmige Messstrecke 14 bilden. Ebenfalls an der Oberseite des Gehäuses 17 befinden sich eine Messanordnung 3 sowie eine Steuer- und Auswerteeinheit 6, welche die Messanordnung 3 steuert und aus den von der Messanordnung 3 stammenden elektrischen Signalen Durchflussmengendaten ermittelt. Die Messanordnung 3 sowie die Steuer- und Auswerteeinheit 6 können in einem gemeinsamen Gehäuse 18 (Elektronikgehäuse) untergebracht sein.

Die Messung der Durchflussmenge erfolgt z. B. nach dem sogenannten Differenzlaufzeitverfahren. Hierzu werden von dem ersten Ultraschallwandler 11A sowie zweiten Ultraschallwandler 11B jeweils im Wechsel Ultraschallsignale ausgesendet und empfangen, die Laufzeitdifferenz festgestellt und daraus die Fließgeschwindigkeit des Fluids sowie das Durchflussvolumen ermittelt.

Wie aus Fig. 1 weiterhin hervorgeht, ist der Durchflusszähler 1 strömungstechnisch symmetrisch aufgebaut und unterliegt demnach in und gegen die Durchflussrichtung 4 den gleichen Strömungsverhältnissen. Somit ist es möglich, den Durchflusszähler 1 sowohl in Durchflussrichtung 4 als auch entgegen der Durchflussrichtung 4 einzubauen, ohne dass dies einen strömungstechnischen Unterschied begründet.

Beispielsweise sind identische Strömungsleitelemente sowohl einlaufseitig als auch auslaufseitig vorgesehen, wie dies durch einen ersten Strömungsleiter 20A sowie einen identischen zweiten Strömungsleiter 20B in Fig. 1 beispielhaft verdeutlicht ist. Ferner können zusätzlich zu oder anstelle der Strömungsleitelemente Strömungssiebe z. B. in Form eines ersten Siebs 21A sowie eines identischen zweiten Siebs 21B vorgesehen sein. Die Strömungsverhältnisse sind damit in der Messstrecke 14 unabhängig von der Einbaulage stets gleich, sodass die Einbauausrichtung keine Auswirkungen auf das Messergebnis bewirken kann.

Die Messanordnung 3 beinhaltet erste sowie zweite Signalverarbeitungsmodule wie z. B. Verstärker 12A sowie 12B oder dgl. Ferner umfasst die Messanordnung 3 zur Aufschaltung des jeweiligen Ultraschallwandlers 11A, 11B auf die Steuer- und Auswerteeinheit 6 während des Betriebs einen Umschalter 13. Die Steuer- und Auswerteeinheit 6 kann weiterhin einen Prozessor 15 sowie einen Speicher 16 unter anderem zur Speicherung der ermittelten Messwertdaten beinhalten. Auch die Messanordnung 3 kann, wie aus Fig. 1 ersichtlich, symmetrisch aufgebaut sein.

Der Durchflusszähler besitzt eine gerätespezifisch vorgegebene Zählerdurchflussrichtung 4A. Diese Zählerdurchflussrichtung 4A entspricht der in Fig. 1 dargestellten beispielhaften Installation der Durchflussrichtung 4 in der Versorgungsleitung 5. Der Durchflusszähler ist somit von Anfang an korrekt eingebaut. Erfindungsgemäß kann die Zählerdurchflussrichtung 4A mit der Einbaudurchflussrichtung 4B, wie in Fig. 1, übereinstimmen, muss es aber nicht.

Erfindungsgemäß wird bei Installation oder Wiederinstallation im Durchflusszähler 1 anhand von ohnehin zur Verfügung stehenden Durchflussmengendaten im Rahmen einer Konfigurationsroutine die Durchflussrichtung des installierten Durchflusszählers 1 von der Steuer- und Auswerteeinheit 6 als tatsächliche Einbaudurchflussrichtung 4B selbsttätig ermittelt und mit der Zählerdurchflussrichtung 4A verglichen. Stimmen die Durchflussrichtungen überein, wird die Zählerdurchflussrichtung 4A beibehalten. Stimmen sie jedoch nicht überein, wird die Zählerdurchflussrichtung 4A ohne Demontage/Wiedermontage des Durchflusszählers steuerungsintern an die Einbaudurchflussrichtung 4B angepasst.

Gleichsam können hierzu die Betriebsparameter in der Signalauswertung umgedreht werden. Aufgrund der strömungstechnischen Symmetrie ergeben sich hierdurch keine Auswirkungen auf das Messergebnis.

Der Durchflusszähler 1 passt sich somit den bei der Erstkonfiguration ermittelten Gegebenheiten an und kann anschließend direkt in den Dauerbetrieb übergehen. Dementsprechend kann ein und derselbe Durchflusszähler 1 sowohl in der einen Richtung als auch um 180° gedreht in die Versorgungsleitung 5 montiert und so verwendet werden. Insofern kann die Lagerhaltung an entsprechenden Durchflusszählern erheblich reduziert werden.

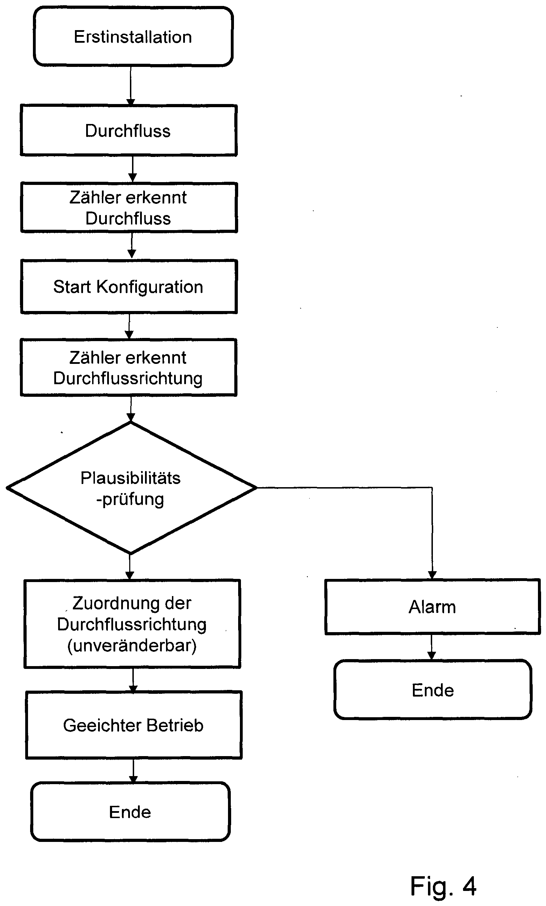

Ein Beispiel der Selbstkonfiguration ist für den Durchflusszähler 1 der Fig. 1 in dem Flussdiagramm der Fig. 4 dargestellt. Nach der Montage des Durchflusszählers 1 (Erstinstallation) wird das Messrohr des Duchflusszählers 1 von dem zu messenden Fluid erstmals durchströmt. Der Durchflusszähler 1 erkennt den Durchfluss und startet die Konfiguration.

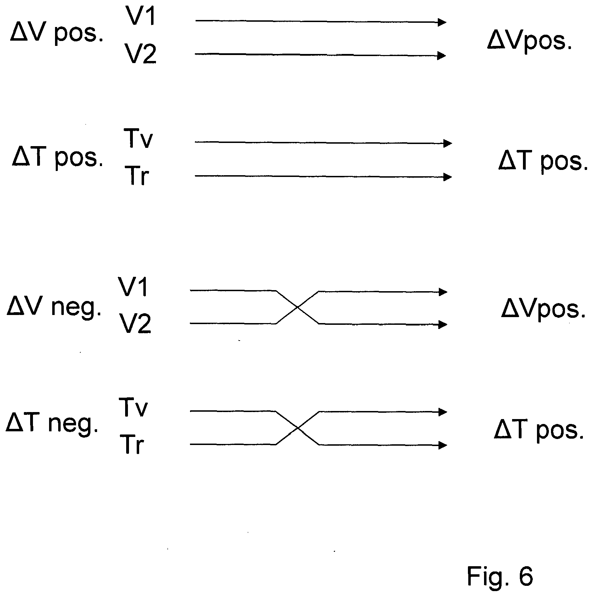

Die Position "Zähler erkennt Durchflussrichtung" bedeutet, dass anhand des Vorzeichens der gemessenen Volumendifferenz V1-V2 = ΔV in der einen sowie anderen Richtung die Anpassung der Zählerdurchflussrichtung 4A an die Einbaudurchflussrichtung 4B erfolgt, so dass die Zählerdurchflussrichtung 4A und die Einbaudurchflussrichtung 4B übereinstimmen. Ist die ermittelte Volumendifferenz negativ (ΔV neg.), wird die Zuordnung der Durchflussdaten V1, V2 in der Datenverarbeitung vertauscht. Ist die gemessene Volumendifferenz positiv (ΔV pos.), bleibt die Zuordnung der Durchflussdaten V1, V2 unverändert (vgl. jeweils Fig. 6).

Nachdem der Zähler die Durchflussrichtung erkannt hat, überprüft die Steuer- und Auswerteeinheit die Daten bzw. die Zuordnung der Durchflussdaten auf Plausibilität. Offensichtliche Fehler oder Unklarheiten, zum Beispiel durch Luft oder Rückflüsse in der Leitung, können dadurch ausgeschlossen werden. Die Plausibilitätsroutine umfasst z. B. eine Erfassung des Durchflusses über eine vorgegebene Zeit tx. Zum Beispiel erfolgt eine Überprüfung dahingehend, ob die Durchflussrichtung und/oder die Durchflussmenge innerhalb von vorgegebenen Grenzen über die Zeit tx hinweg gleichbleibend ist.

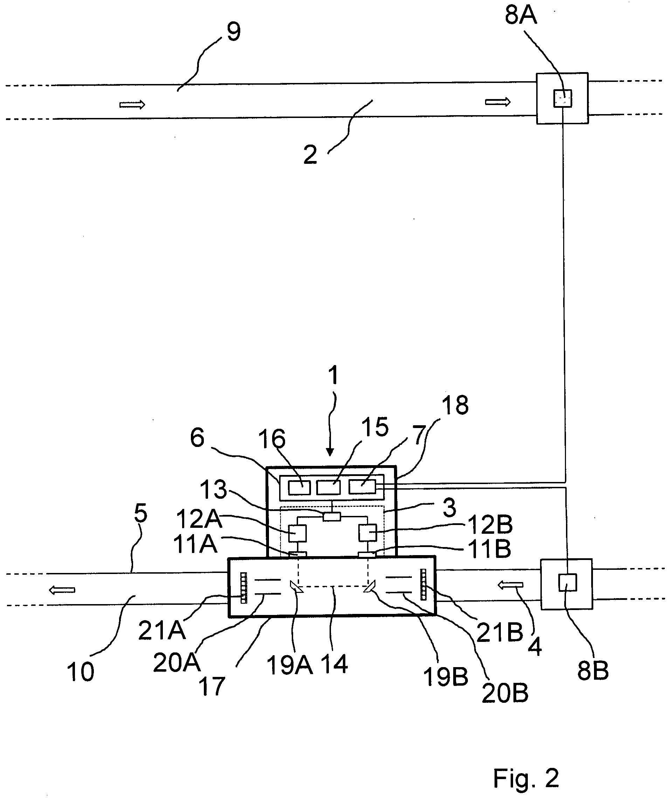

Falls die Plausibilitätsroutine negativ ist, erfolgt ein Alarm und/oder ein Abbruch der Konfigurationsroutine. Gegebenenfalls müssen weitere Maßnahmen wie z. B. Spülen der Versorgungsleitung 5 erfolgen. Ist die Plausibilitätsprüfung jedoch positiv, wird die Anpassung der Zählerdurchflussrichtung 4A an die Einbaudurchflussrichtung 4B systemseitig für den Dauerbetrieb unveränderbar festgelegt. Der Durchflusszähler kann in diesem Zustand vorzugsweise auch geeicht werden. Der Durchflusszähler in Fig. 2 unterscheidet sich von dem Durchflusszähler in Fig. 1 dadurch, dass zusätzlich eine Temperaturmesseinrichtung 7 vorgesehen ist. Dieser Durchflusszähler 1 arbeitet somit als Wärme- bzw. Energiezähler. Die Temperaturmesseinrichtung 7 umfasst einen ersten Temperatursensor 8A sowie einen zweiten Temperatursensor 8B, wobei der erste Temperatursensor 8A und der zweite Temperatursensor 8B zur Ermittlung einer Temperaturdifferenz zwischen einer Vorlauftemperatur im Vorlauf 9 und einer Rücklauftemperatur im Rücklauf 10 vorgesehen sind. Anhand der Temperaturdifferenz kann von der Steuer- und Auswerteeinheit 6 der Einbauort des ersten Temperatursensors 8A sowie des zweiten Temperatursensors 8B im Vor- bzw. Rücklauf selbsttätig ermittelt werden.

Dementsprechend kann somit bei Installation oder Wiederinstallation im Durchflusszähler 1 unter Einbeziehung der ermittelten Temperaturdaten z. B. der Temperaturdifferenz, im Rahmen einer Konfigurationsroutine von der Steuer- und Auswerteeinheit 6 eine Zuordnung der Temperatursensoren 8A, 8B zu Vorlauf 9 bzw. Rücklauf 10 festgelegt werden.

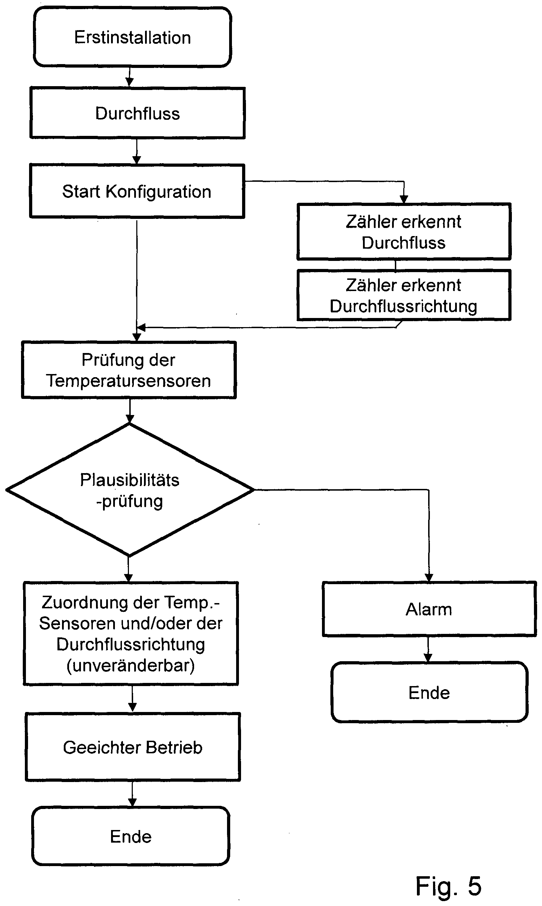

Im zugehörigen Flussdiagramm gemäß Fig. 5 erfolgt nach dem Start der Konfiguration entweder auch - wie beim Ablauf gemäß Fig. 4 - die Durchflusserkennung und anschließend oder sogleich eine Prüfung der Temperatursensoren 8A, 8B. Die "Prüfung der Temperatursensoren" bedeutet, dass anhand der gemessenen Temperaturdifferenz ΔT zwischen den Temperatursensoren 8A und 8B die Zuordnung von erstem Temperatursensor 8A sowie zweitem Temperatursensor 8B zu dem Vorlauf 9 bzw. Rücklauf 10 erfolgt. Ist z. B. der Messwert der ermittelten Temperaturdifferenz negativ (ΔT neg.), wird die Zuordnung der Temperatursensoren 8A, 8B bezüglich Vorlauf 9 sowie Rücklauf 10 vertauscht. Ist z. B. der Messwert der ermittelten Temperaturdifferenz ΔT positiv (ΔT pos.), bleibt die Zuordnung der Temperatursensoren 8A, 8B bezüglich Vorlauf 9 sowie Rücklauf 10 unverändert (vgl. jeweils Fig. 6).

Auch hierbei erfolgt im Anschluss eine Plausibilitätsprüfung. Die Plausibilitätsroutine kann z. B. den Vergleich einer gemessenen Temperaturdifferenz ΔT mit einer vorgegebenen Temperaturdifferenz umfassen. Beispielsweise können Messwerte mit einer gemessenen Temperaturdifferenz von zum Beispiel ΔT > 3 K als plausibel zugeordnet werden.

Ist die Plausibilitätsprüfung positiv, wird die Zuordnung der ersten und zweiten Temperatursensoren 8A, 8B systemseitig für den Dauerbetrieb unveränderbar festgelegt. Der Durchflusszähler kann in diesem Zustand vorzugsweise auch geeicht werden. Ist die Plausibilitätsprüfung negativ, erfolgt ein Alarm.

Die beiden Möglichkeiten der selbstständigen Konfiguration, also der automatischen Erkennung und Anpassung der Durchflussrichtung als auch die Zuordnung der Temperatursensoren können, vgl. Fig. 5, entweder beide zusammen erfolgen oder auch jede für sich alternativ. In jedem Fall passt sich der Durchflussmesser an die bei der Erstkonfiguration ermittelten Messwerte an und kann anschließend direkt in den Dauerbetrieb übergehen. Eine Ummontage von Durchflusszähler und/oder der Temperaturfühler 8A, 8B ist nicht erforderlich.

Ist die Zuordnung der Temperatursensoren 8A, 8B zum Durchflusszähler 1 bzw. zu den Eingängen oder Ports der Temperaturmesseinrichtung 7 bekannt, kann aus der Temperaturdifferenz auch auf den Einbauort des Durchflusszählers 1 im Vorlauf 9 oder Rücklauf 10 geschlossen werden und dies auch bei der Konfiguration mit einbezogen werden. Nach der selbstständigen Konfiguration kann der Durchflussmesser in den geeichten und unabänderlichen Betrieb übergeführt werden.

### BEZUGSZEICHENLISTE

- 1: Durchflusszähler
- 2: Fluid
- 3: Messanordnung
- 4: Durchflussrichtung
- 4A: Zählerdurchflussrichtung
- 4B: Einbaudurchflussrichtung
- 5: Versorgungsleitung
- 6: Steuer- und Auswerteeinheit
- 7: Temperaturmesseinrichtung
- 8A: erster Temperatursensor
- 8B: zweiter Temperatursensor
- 8C: dritter Temperatursensor
- 9: Vorlauf
- 10: Rücklauf
- 11A: erster Ultraschallwandler
- 11B: zweiter Ultraschallwandler
- 12A: erster Verstärker
- 12B: zweiter Verstärker
- 13: Umschalter
- 14: Messstrecke
- 15: Prozessor
- 16: Speicher
- 17: Gehäuse
- 18: Gehäuse
- 19A: erster Reflektor
- 19B: zweiter Reflektor
- 20A: erster Strömungsleiter
- 20B: zweiter Strömungsleiter
- 21A: erstes Sieb
- 21B: zweites Sieb

## Patentansprüche

1. Durchflusszähler (1) zur Erfassung der Durchflussmenge eines strömenden Fluids (2) zum Einbau in eine das Fluid (2) beinhaltende Versorgungsleitung (5) mit
einer Messanordnung (3), die von dem Fluid (2) mit einer vorgegebenen Zählerdurchflussrichtung (4A), in der der Durchflusszähler (1) dauerhaft betrieben wird, durchströmt wird,
einer Steuer- und Auswerteeinheit (6), welche die Messanordnung (3) steuert und Durchflussmengendaten ermittelt,
**dadurch gekennzeichnet, dass**
die Einbausituation bezüglich der Durchflussrichtung nicht geräteseitig definiert vorgegebenen ist, sondern durch den Durchflusszähler selbst auf der Grundlage der dem Durchflusszähler zur Verfügung stehenden Messdaten festgelegt wird,
indem anhand der Durchflussmengendaten die einbauabhängige Durchflussrichtung von der Steuer- und Auswerteeinheit (6) als Einbaudurchflussrichtung (4B) selbsttätig ermittelt wird, und
sich die Steuer- und Auswerteeinheit (6) bei einer Erst- oder Wiederinstallation des Durchflusszählers (1) im Rahmen einer Konfigurationsroutine anhand der Durchflussmengendaten selbsttätig konfiguriert derart, dass in dem der Erstinstallation bzw. Wiederinstallation nachfolgenden Dauerbetrieb
die Zählerdurchflussrichtung (4A) steuerungsintern an die Einbaudurchflussrichtung (4B) angepasst ist, so dass die Zählerdurchflussrichtung (4A) und die Einbaudurchflussrichtung (4B) übereinstimmen.

2. Durchflusszähler (1) zur Erfassung der Wärmemenge eines strömenden Fluids (2) zum Einbau in eine das Fluid (2) beinhaltende Versorgungsleitung (5) mit
einer Messanordnung (3), die von dem Fluid (2) mit einer vorgegebenen Zählerdurchflussrichtung (4A), in der der Durchflusszähler (1) dauerhaft betrieben wird, durchströmt wird,
einer Steuer- und Auswerteeinheit (6), welche die Messanordnung (3) steuert und Durchflussmengendaten ermittelt, und
einer Temperaturmesseinrichtung (7), welche einen ersten Temperatursensor (8A) sowie einen zweiten Temperatursensor (8B) umfasst, wobei der erste Temperatursensor (8A) und der zweite Temperatursensor (8B) zur Ermittlung einer Temperaturdifferenz zwischen einer Vorlauftemperatur im Vorlauf (9) und einer Rücklauftemperatur im Rücklauf (10) vorgesehen sind,
**dadurch gekennzeichnet, dass**
die Einbausituation bezüglich des Installationsortes im Vorlauf oder im Rücklauf nicht geräteseitig definiert vorgegebenen ist, sondern durch den Durchflusszähler selbst auf der Grundlage der dem Durchflusszähler zur Verfügung stehenden Messdaten festgelegt wird,
indem anhand der Temperaturdifferenz der Einbauort des ersten Temperatursensors (8A) sowie des zweiten Temperatursensors (8B) im Vor- bzw. Rücklauf von der Steuer- und Auswerteeinheit (6) selbsttätig ermittelt wird, und
sich die Steuer- und Auswerteeinheit (6) bei einer Erst- oder Wiederinstallation des Durchflusszählers (1) im Rahmen einer Konfigurationsroutine anhand der Temperaturdifferenz selbsttätig konfiguriert derart, dass in dem der Erstinstallation bzw. Wiederinstallation nachfolgenden Dauerbetrieb in Abhängigkeit von der gemessenen Temperaturdifferenz der erste Temperatursensor (8A) sowie der zweite Temperatursensor (8B) dem Vorlauf (9) bzw. Rücklauf (10) zugeordnet werden.

3. Durchflusszähler nach Anspruch 1 oder 2,
**dadurch gekennzeichnet, dass**
der Durchflusszähler (1) strömungstechnisch symmetrisch aufgebaut ist und/oder Strömungsleitelemente und/oder Strömungssiebe und/oder Reflektoren und/oder Halterungen in symmetrischer Anordnung und/oder Ausbildung in einem Gehäuse (17) vorgesehen sind.

4. Durchflusszähler nach Anspruch 1,
**dadurch gekennzeichnet, dass**
die Steuer- und Auswerteeinheit (6) eine Plausibilitätsroutine umfasst, die vorzugsweise eine Erfassung des Durchflusses über eine vorgegebene Zeit tx umfasst.

5. Durchflusszähler nach Anspruch 2,
**dadurch gekennzeichnet, dass**
die Steuer- und Auswerteeinheit (6) eine Plausibilitätsroutine umfasst, die vorzugsweise eine Erfassung einer vorgegebenen Temperaturdifferenz ΔT umfasst.

6. Durchflusszähler nach mindestens einem der vorhergehenden Ansprüche 4 oder 5,
**dadurch gekennzeichnet, dass**
die Steuer- und Auswerteeinheit (6) eine Alarmroutine umfasst, die aktivierbar ist, sofern das Ergebnis der Plausibilitätsprüfung negativ ist.

7. Durchflusszähler nach einem der Ansprüche 1,
**dadurch gekennzeichnet, dass**
die Anpassung der Zählerdurchflussrichtung (4A) an die Einbaudurchflussrichtung (4B) von der Steuer- und Auswerteeinheit (6) bei der Erst- oder Wiederinstallation unveränderbar festgelegt wird und/oder dass es sich bei der Anpassung der Zählerdurchflussrichtung (4A) an die Einbaudurchflussrichtung (4B) von der Steuer- und Auswerteeinheit (6) bei der Erst- oder Wiederinstallation um einen softwaregesteuerten Prozess handelt, bei dem die Durchflussmengendaten ausgewertet und Informationen zur Durchflussrichtung generiert werden.

8. Durchflusszähler nach mindestens einem der Ansprüche 2, 3, 5 oder 6,
**dadurch gekennzeichnet, dass**
die Zuordnung von erstem Temperatursensor (8A) sowie zweitem Temperatursensor (8B) zum Vorlauf (9) bzw. Rücklauf (10) von der Steuer- und Auswerteeinheit (6) bei der Erst- oder Wiederinstallation unveränderbar festgelegt wird und/oder es sich bei der Anpassung der Zuordnung von erstem Temperatursensor (8A) sowie zweitem Temperatursensor (8B) zum Vorlauf (9) bzw. Rücklauf (10) von der Steuer- und Auswerteeinheit (6) bei der Erst- oder Wiederinstallation um einen softwaregesteuerten Prozess handelt, bei dem die Temperaturdifferenzdaten ausgewertet und Informationen zum Einbauort generiert werden.

9. Durchflusszähler nach einem der Ansprüche 2, 3, 5, 6 oder 8,
**dadurch gekennzeichnet, dass**
ein dritter Temperatursensor (8C) vorgesehen ist, der sich am oder im Gehäuse (17) des Durchflusszählers (1) befindet,
im Rahmen der Erst- oder Wiederinstallation die Temperaturdifferenz durch Messung der Temperaturdifferenz zwischen dem dritten Temperatursensor (8C) und dem ersten Temperatursensor (8A) sowie die Temperaturdifferenz durch Messung der Temperaturdifferenz zwischen dem dritten Temperatursensor (8C) und dem zweiten Temperatursensor (8B) ermittelt wird.

10. Durchflusszähler nach Anspruch 9,
**dadurch gekennzeichnet, dass**
ein Temperatursensor (8A, 8B oder 8C) für eine Korrektur der ermittelten Durchflussmenge herangezogen wird.

11. Durchflusszähler nach Anspruch 9 oder 10,
**dadurch gekennzeichnet, dass**
der Temperatursensor aus dem Paar mit dem ersten Temperatursensor (8A) oder dem zweiten Temperatursensor (8B) für die Volumenkorrektur ausgewählt wird, der zum dritten Temperatursensor (8C) die geringe-re Temperaturdifferenz aufweist.

12. Durchflusszähler nach einem der Ansprüche 1, 3, 4, 6 oder 7,
**dadurch gekennzeichnet, dass**
die selbsttätige Ermittlung der Durchflussdaten nach erfolgter Anpassung der Durchflussrichtung deaktiviert wird.

13. Durchflusszähler nach einem der Ansprüche 2, 3, 5, 6 oder 8 bis 11,
**dadurch gekennzeichnet, dass**
die selbsttätige Ermittlung der Temperaturdifferenz nach erfolgter Zuordnung der Temperatursensoren (8A, 8B) deaktiviert wird.

14. Durchflusszähler nach einem der Ansprüche 1, 3, 4, 6, 7 oder 12,
**dadurch gekennzeichnet, dass**
im Rahmen der Selbstkonfiguration die Messdaten des Durchflusses zur Anpassung der Zählerdurchflussrichtung (4A) an die Einbaudurchflussrichtung (4B) untereinander vertauscht werden

15. Durchflusszähler nach einem der Ansprüche 2, 3, 5, 6, 8 bis 11 oder 13,
**dadurch gekennzeichnet, dass**
im Rahmen der Selbstkonfiguration die Messdaten der Temperatursensoren (8A, 8B) zur Zuordnung des ersten Temperatursensors (8A) sowie des zweiten Temperatursensors (8B) zum Vorlauf (9) bzw. Rücklauf (10) untereinander vertauscht werden.

## Claims

1. Flow meter (1) for detecting the flow rate of a flowing fluid (2) for fitting into a supply line (5) containing the fluid (2), having
a measuring arrangement (3) which is flowed through by the fluid (2) in a predefined meter throughflow direction (4A), in which the flow meter (1) is continuously operated,
a control and evaluation unit (6) which controls the measuring arrangement (3) and determines flow rate data, **characterized in that**
the fitting situation with respect to the throughflow direction is not predefined on the device, but rather is established by the flow meter itself on the basis of the measurement data available to the flow meter in that the fitting-dependent throughflow direction is automatically determined by the control and evaluation unit (6) as the fitting throughflow direction (4B) on the basis of the flow rate data, and,
with a first installation or re-installation of the flow meter (1), the control and evaluation unit (6) is automatically configured during a configuration routine on the basis of the flow rate data in such a way that, during the continuous operation following the first installation or re-installation,
the meter throughflow direction (4A) is matched to the fitting throughflow direction (4B) control-internally, with the result that the meter throughflow direction (4A) and the fitting throughflow direction (4B) coincide.

2. Flow meter (1) for detecting the amount of heat of a flowing fluid (2) for fitting into a supply line (5) containing the fluid (2), having
a measuring arrangement (3) which is flowed through by the fluid (2) in a predefined meter throughflow direction (4A), in which the flow meter (1) is continuously operated,
a control and evaluation unit (6) which controls the measuring arrangement (3) and determines flow rate data, and
a temperature-measuring device (7) which comprises a first temperature sensor (8A) and a second temperature sensor (8B), wherein the first temperature sensor (8A) and the second temperature sensor (8B) are provided for determining a temperature difference between a feed temperature in the feed line (9) and a return temperature in the return line (10),
**characterized in that**
the fitting situation with respect to the installation location in the feed line or in the return line is not predefined on the device, but rather is established by the flow meter itself on the basis of the measurement data available to the flow meter
**in that** the fitting location of the first temperature sensor (8A) and of the second temperature sensor (8B) in the feed line and the return line, respectively, is automatically determined by the control and evaluation unit (6) on the basis of the temperature difference, and, with a first installation or re-installation of the flow meter (1), the control and evaluation unit (6) is automatically configured during a configuration routine on the basis of the temperature difference in such a way that, during the continuous operation following the first installation or re-installation, the first temperature sensor (8A) and the second temperature sensor (8B) are assigned to the feed line (9) and return line (10), respectively, in a manner dependent on the measured temperature difference.

3. Flow meter according to Claim 1 or 2,
**characterized in that**
the flow meter (1) is constructed symmetrically in terms of flow, and/or flow-guiding elements and/or flow screens and/or reflectors and/or holders are provided in a symmetrical arrangement and/or formation in a housing (17) .

4. Flow meter according to Claim 1,
**characterized in that**
the control and evaluation unit (6) comprises a plausibility routine, which preferably comprises a detection of the throughflow over a predefined time tx.

5. Flow meter according to Claim 2,
**characterized in that**
the control and evaluation unit (6) comprises a plausibility routine, which preferably comprises a detection of a predefined temperature difference ΔT.

6. Flow meter according to at least either of the preceding Claims 4 and 5,
**characterized in that**
the control and evaluation unit (6) comprises an alarm routine which can be activated if the result of the plausibility check is negative.

7. Flow meter according to one of Claims 1,
**characterized in that**
the matching of the meter throughflow direction (4A) to the fitting throughflow direction (4B) is unchangeably established by the control and evaluation unit (6) during the first installation or re-installation, and/or **in that** the matching of the meter throughflow direction (4A) to the fitting throughflow direction (4B) by the control and evaluation unit (6) during the first installation or re-installation is a software-controlled process in which the flow rate data are evaluated and information on the throughflow direction is generated.

8. Flow meter according to at least one of Claims 2, 3, 5 and 6,
**characterized in that**
the assignment of the first temperature sensor (8A) and the second temperature sensor (8B) to the feed line (9) and the return line (10), respectively, is unchangeably established by the control and evaluation unit (6) during the first installation or re-installation, and/or the matching of the assignment of the first temperature sensor (8A) and the second temperature sensor (8B) to the feed line (9) and the return line (10), respectively, by the control and evaluation unit (6) during the first installation or re-installation is a software-controlled process in which the temperature difference data are evaluated and information on the fitting location is generated.

9. Flow meter according to one of Claims 2, 3, 5, 6 and 8,
**characterized in that**
provision is made of a third temperature sensor (8C) which is situated on or in the housing (17) of the flow meter (1),
during the first installation or re-installation, the temperature difference is determined by measuring the temperature difference between the third temperature sensor (8C) and the first temperature sensor (8A) and the temperature difference is determined by measuring the temperature difference between the third temperature sensor (8C) and the second temperature sensor (8B).

10. Flow meter according to Claim 9,
**characterized in that**
use is made of a temperature sensor (8A, 8B or 8C) for correcting the determined flow rate.

11. Flow meter according to Claim 9 or 10,
**characterized in that,**
for the volume correction, the temperature sensor from the pair comprising the first temperature sensor (8A) or the second temperature sensor (8B) which has the smaller temperature difference in relation to the third temperature sensor (8C) is selected.

12. Flow meter according to one of Claims 1, 3, 4, 6 or 7,
**characterized in that**
the automatic determination of the throughflow data is deactivated after the throughflow direction has been matched.

13. Flow meter according to one of Claims 2, 3, 5, 6 or 8 to 11,
**characterized in that**
the automatic determination of the temperature difference is deactivated after the temperature sensors (8A, 8B) have been assigned.

14. Flow meter according to one of Claims 1, 3, 4, 6, 7 or 12,
**characterized in that,**
during the self-configuration, the measurement data of the throughflow for matching the meter throughflow direction (4A) to the fitting throughflow direction (4B) are interchanged.

15. Flow meter according to one of Claims 2, 3, 5, 6, 8 to 11 or 13,
**characterized in that,**
during the self-configuration, the measurement data of the temperature sensors (8A, 8B) for assignment of the first temperature sensor (8A) and of the second temperature sensor (8B) to the feed line (9) and the return line (10), respectively, are interchanged.

## Revendications

1. Débitmètre (1) destiné à détecter le débit d'un fluide (2) en écoulement et à être installé dans une conduite d'alimentation (5) contenant le fluide (2), ledit débitmètre comprenant
un ensemble de mesure (3) à travers lequel le fluide (2) s'écoule dans un sens d'écoulement de débitmètre spécifié (4A) dans lequel le débitmètre (1) fonctionne en continu,
une unité de commande et d'évaluation (6) qui commande l'ensemble de mesure (3) et qui détermine des données de débit,
**caractérisé en ce que**
la situation d'installation par rapport au sens d'écoulement n'est pas spécifiée côté appareil, mais est définie par le débitmètre lui-même sur la base des données de mesure dont dispose le débitmètre,
du fait que le sens d'écoulement dépendant de l'installation est déterminé automatiquement comme sens d'écoulement d'installation (4B) par l'unité de commande et d'évaluation (6) sur la base des données de débit, et
l'unité de commande et d'évaluation (6) se configure automatiquement lors de la première installation ou de la réinstallation du débitmètre (1) dans le cadre d'une routine de configuration sur la base des données de débit de manière à ce qu'en fonctionnement continu après la première installation ou la réinstallation,
le sens d'écoulement (4A) du débitmètre soit adapté de manière commandée en interne au sens d'écoulement (4B) de l'installation de sorte que le sens d'écoulement (4A) du débitmètre et le sens d'écoulement (4B) de l'installation concordent.

2. Débitmètre (1) destiné à détecter la quantité de chaleur d'un fluide (2) en écoulement et à être installé dans une conduite d'alimentation (5) contenant le fluide (2), ledit débitmètre comprenant un ensemble de mesure (3) à travers lequel le fluide (2) s'écoule dans un sens d'écoulement de débitmètre spécifié (4A) dans lequel le débitmètre (1) fonctionne en continu,
une unité de commande et d'évaluation (6) qui commande l'ensemble de mesure (3) et qui détermine des données de débit, et
un dispositif de mesure de température (7) qui comprend un premier capteur de température (8A) et un deuxième capteur de température (8B), le premier capteur de température (8A) et le deuxième capteur de température (8B) étant prévus pour déterminer dans la canalisation de retour (10) une différence de température entre une température de canalisation montante (9) et une température de canalisation de retour,
**caractérisé en ce que**
la situation d'installation par rapport à l'emplacement d'installation dans la canalisation montante ou la canalisation de retour n'est pas spécifiée du côté appareil, mais est définie par le débitmètre lui-même sur la base des données de mesure dont le débitmètre dispose,
du fait que l'emplacement d'installation du premier capteur de température (8A) et du deuxième capteur de température (8B) est déterminé automatiquement par l'unité de commande et d'évaluation (6) dans la canalisation montante et la canalisation de retour sur la base de la différence de température, et
l'unité de commande et d'évaluation (6) se configure automatiquement lors de la première installation ou de la réinstallation du débitmètre (1) dans le cadre d'une routine de configuration sur la base de la différence de température, de sorte que, dans le fonctionnement continu après la première installation ou la réinstallation, le premier capteur de température (8A) et le deuxième capteur de température (8B) soient associés à la canalisation montante (9) et la canalisation de retour (10).

3. Débitmètre selon la revendication 1 ou 2,
**caractérisé en ce que**
le débitmètre (1) est construit symétriquement en termes d'écoulement et/ou des éléments de guidage d'écoulement et/ou des tamis d'écoulement et/ou des réflecteurs et/ou des supports sont prévus dans un agencement et/ou une conception symétrique dans un boîtier (17).

4. Débitmètre selon la revendication 1,
**caractérisé en ce que**
l'unité de commande et d'évaluation (6) comprend une routine de plausibilité qui comprend de préférence une détection du débit sur un temps tx spécifié.

5. Débitmètre selon la revendication 2,
**caractérisé en ce que**
l'unité de commande et d'évaluation (6) comprend une routine de plausibilité qui comprend de préférence une détection d'une différence de température spécifiée ΔT.

6. Débitmètre selon l'une au moins des revendications précédentes 4 ou 5,
**caractérisé en ce que**
l'unité de commande et d'évaluation (6) comprend une routine d'alarme qui peut être activée si le résultat du contrôle de plausibilité est négatif.

7. Débitmètre selon l'une des revendications 1,
**caractérisé en ce que**
l'adaptation du sens d'écoulement (4A) du débitmètre au sens d'écoulement (4B) de l'installation est définie par l'unité de commande et d'évaluation (6) lors de la première installation ou de la réinstallation et/ou **en ce que** l'adaptation du sens d'écoulement (4A) du débitmètre au sens d'écoulement (4B) de l'installation par l'unité de commande et d'évaluation (6) lors de la première installation ou de la réinstallation est un processus commandé par logiciel dans lequel les données de débit sont évaluées et des informations relatives au sens d'écoulement sont générées.

8. Débitmètre selon l'une au moins des revendications 2, 3, 5 ou 6,
**caractérisé en ce que**
l'association du premier capteur de température (8A) et du deuxième capteur de température (8B) à la canalisation montante (9) ou à la canalisation de retour (10) est définie de manière invariable par l'unité de commande et d'évaluation (6) lors de la première installation ou de la réinstallation et/ou l'adaptation de l'association du premier capteur de température (8A) et du deuxième capteur de température (8B) à la canalisation montante (9) ou à la canalisation de retour (10) par l'unité de commande et d'évaluation (6) lors de la première installation ou de la réinstallation est un processus commandé par logiciel dans lequel les données de différence de température sont évaluées et des informations relatives à l'emplacement d'installation sont générées.

9. Débitmètre selon l'une des revendications 2, 3, 5, 6 ou 8,
**caractérisé en ce que**
un troisième capteur de température (8C) est prévu qui est situé sur ou dans le boîtier (17) du débitmètre (1),
dans le cadre de la première installation ou de la réinstallation, la différence de température est déterminée par mesure de la différence de température entre le troisième capteur de température (8C) et le premier capteur de température (8A) et la différence de température est déterminée par mesure de la différence de température entre le troisième capteur de température (8C) et le deuxième capteur de température (8B) .

10. Débitmètre selon la revendication 9,
**caractérisé en ce que**
un capteur de température (8A, 8B ou 8C) est utilisé pour corriger le débit déterminé.

11. Débitmètre selon la revendication 9 ou 10,
**caractérisé en ce que**
le capteur de température sélectionné parmi la paire comprenant le premier capteur de température (8A) ou le deuxième capteur de température (8B) pour effectuer la correction de volume est celui qui a la plus faible différence de température par rapport au troisième capteur de température (8C).

12. Débitmètre selon l'une des revendications 1, 3, 4, 6 ou 7,
**caractérisé en ce que**
la détermination automatique des données de débit est désactivée après que l'adaptation du sens de débit a été effectuée.

13. Débitmètre selon l'une des revendications 2, 3, 5, 6 ou 8 à 11,
**caractérisé en ce que**
la détermination automatique de la différence de température est désactivée après que l'association des capteurs de température (8A, 8B) a été effectuée.

14. Débitmètre selon l'une des revendications 1, 3, 4, 6, 7 ou 12,
**caractérisé en ce que**
dans le cadre de l'auto-configuration, les données de mesure du débit sont échangées afin d'adapter le sens de débit (4A) du débitmètre au sens de débit (4B) de l'installation.

15. Débitmètre selon l'une des revendications 2, 3, 5, 6, 8 à 11 ou 13,
**caractérisé en ce que**
dans le cadre de l'auto-configuration, les données de mesure des capteurs de température (8A, 8B) sont échangées afin d'effectuer l'association du premier capteur de température (8A) et du deuxième capteur de température (8B) à la canalisation montante (9) ou à la canalisation de retour (10).
